# EUROPEAN PATENT SPECIFICATION

(11) **EP 3 838 356 B1**
(45) Date of publication and mention of the grant of the patent: **15.10.2025**
(21) Application number: 19896747.3
(22) Date of filing: 26.11.2019
(51) Int. Cl.: A63F 13/52, G06T 15/00, G06T 11/40

(54) **GAME IMAGE RENDERING METHOD AND DEVICE, TERMINAL, AND STORAGE MEDIUM**
VERFAHREN UND VORRICHTUNG ZUR WIEDERGABE VON SPIELBILDERN, ENDGERÄT UND SPEICHERMEDIUM
PROCÉDÉ ET DISPOSITIF DE RENDU D'IMAGE DE JEU, TERMINAL ET SUPPORT DE STOCKAGE

(30) Priority: 13.12.2018 CN 201811525614
(43) Date of publication of application: 23.06.2021
(73) Proprietor: Tencent Technology (Shenzhen) Company Limited, Shenzhen, Guangdong, 518057 (CN)
(72) Inventor: GUO, Yuan, Shenzhen, Guangdong 518057 (CN)
(74) Representative: Novagraaf International SA
(86) International application number: PCT/CN2019/120922
(87) International publication number: WO 2020/119444

(56) References cited:
- EP-A1- 2 261 862
- CN-A- 101 923 727
- CN-A- 107 077 755
- CN-A- 108 579 082
- CN-A- 110 152 291
- US-A1- 2011 285 709
- US-A1- 2013 135 322
- US-A1- 2013 328 873
- US-A1- 2018 061 122
- US-A1- 2018 085 670
- JEREMIAH: "Forward vs Deferred vs Forward+ Rendering with DirectX 11 | 3D Game Engine Programming", 4 September 2015 (2015-09-04), pages 1 - 111, XP055837456, Retrieved from the Internet <URL:https://www.3dgep.com/forward-plus/> [retrieved on 20210903]
- ANDRADE PAULO ET AL: "Towards a heuristic based real time hybrid rendering a strategy to improve real time rendering quality using heuristics and ray tracing", 2014 INTERNATIONAL CONFERENCE ON COMPUTER VISION THEORY AND APPLICATIONS (VISAPP), SCITEPRESS, vol. 3, 5 January 2014 (2014-01-05), pages 12 - 21, XP032792160
- ZHANG ZHUOPENG ET AL: "Screen Space Hair Self Shadowing by Translucent Hybrid Ambient Occlusion", 25 March 2017, ICIAP: INTERNATIONAL CONFERENCE ON IMAGE ANALYSIS AND PROCESSING, 17TH INTERNATIONAL CONFERENCE, NAPLES, ITALY, SEPTEMBER 9-13, 2013. PROCEEDINGS; [LECTURE NOTES IN COMPUTER SCIENCE; LECT.NOTES COMPUTER], SPRINGER, BERLIN, HEIDELBERG, PAGE(S) 29 - 40, ISBN: 978-3-642-17318-9, XP047407572
- OLA OLSSON ET AL: "Clustered deferred and forward shading", PROCEEDINGS OF THE FOURTH ACM SIGGRAPH / EUROGRAPHICS CONFERENCE ON HIGH-PERFORMANCE GRAPHICS, 25 June 2012 (2012-06-25), pages 87 - 96, XP055222110, ISSN: 2079-8679, ISBN: 978-3-905674-41-5, DOI: 10.2312/EGGH/HPG12/087-096

## Description

### FIELD OF THE TECHNOLOGY

Embodiments of the present disclosure relate to the field of image processing technologies, and in particular, to a method and an apparatus for rendering a game screen, a terminal, and a storage medium.

### BACKGROUND OF THE DISCLOSURE

With the continuous improvement in image processing technologies, a game implementation program can display a richer and higher-quality game screen.

A rendering process of the game screen usually includes the following two stages: a rendering stage and a screen post-processing stage. At the rendering stage, a game scene is rendered, and lighting and shading are performed on the rendered game scene, to obtain a lighted and shaded render target. At the screen post-processing stage, a screen effect is added to the lighted and shaded render target, to generate the game screen.

In certain existing technologies, a rendering manner of the game screen is relatively undiversified, and cannot meet individualized requirements in different scenarios.

US2013135322A1 discloses techniques and structures for determining a rendering mode (e.g., a binning rendering mode and a direct rendering mode) as well as techniques and structures for switching between such rendering modes.

XP055837456 (Jeremiah: "Forward vs Deferred vs Forward+ Rendering with DirectX 11, 3D Game Engine Programming) discloses information relating to different rendering modes and techniques used in 3D computer graphics rendering, which specifically introduces the information on lighting, shading, materials and texturing in forward, forward+ and deferred rendering, and the benefits and drawbacks of each rendering modes.

EP2261862A1 discloses a hybrid and scalable rendering device and a method thereof that selectively utilize a rendering scheme.

US2011285709A1 discloses a method for rendering an object of a 3D image via a pixel shader based on a render context data structure associated with the object.

### SUMMARY

The present invention concerns a method for rendering a game screen according to claim 1, an apparatus according to claim 10, a terminal according to claim 11, and one or more non-transitory computer-readable storage mediums according to claim 12. Further aspects of the present invention are defined in the dependent claims.

### BRIEF DESCRIPTION OF THE DRAWINGS

To describe the technical solutions in the embodiments of the present disclosure more clearly, the accompanying drawings required for describing the embodiments are briefly described below. Apparently, the accompanying drawings in the following description show merely some embodiments of the present disclosure, and a person of ordinary skill in the art may obtain other accompanying drawings according to these accompanying drawings without creative efforts.
FIG. 1 is a schematic exemplary diagram of a related rendering process.
FIG. 2 is a flowchart of a method for rendering a game screen according to an embodiment of the present disclosure.
FIG. 3 is a flowchart of a method for rendering a game screen according to another embodiment of the present disclosure.
FIG. 4 is a schematic exemplary diagram of screen effects of a depth of field effect of a distant view and a height fog effect.
FIG. 5 is a schematic exemplary diagram of a screen effect of an SSAO effect.
FIG. 6 is a schematic exemplary diagram of screen effects of a water effect and a screen space reflection effect.
FIG. 7 is a schematic exemplary diagram of screen effects of an underwater effect, an underwater fog effect, and water plant caustics.
FIG. 8 is a schematic exemplary diagram of screen effects of underground raindrops and aerial raindrops.
FIG. 9 is a schematic exemplary diagram of screen effects of underwater volumetric light and a disturbance effect.
FIG. 10 is a schematic exemplary diagram of screen effects of a plurality of light sources and shadow effects thereof.
FIG. 11 is a schematic exemplary diagram of a screen effect of a Bloom effect.
FIG. 12 is a schematic exemplary diagram of a rendering pipeline corresponding to a screen post-processing stage of a first rendering mode.
FIG. 13 is a schematic exemplary diagram of coordinate conversion.
FIG. 14 is a block diagram of a game screen rendering apparatus according to an embodiment of the present disclosure.
FIG. 15 is a block diagram of a game screen rendering apparatus according to another embodiment of the present disclosure.
FIG. 16 is a block diagram of a terminal according to an embodiment of the present disclosure.

### DETAILED DESCRIPTION

To make the technical solutions and advantages of the present disclosure clearer, implementations of the present disclosure are further described below in detail with reference to the accompanying drawings.

Before the technical solutions of the present disclosure are described, a related rendering process is described first. An entire rendering process may include the following two stages: a rendering stage and a screen post-processing stage.

At the rendering stage, a game scene is rendered, and lighting and shading are performed on the rendered game scene, to obtain a lighted and shaded render target. The game scene refers to an environment where people and objects in a game are located. The game scene is usually a 3D virtual scene constructed by a game developer or designer, rather than a real-world scene. Elements included in the game scene are the people and the objects in the game scene, such as game characters, ground, sky, water, mountains, flowers, grass, trees, stones, birds, beasts, insects, fishes, vehicles, and houses. A rendering process of the game scene is a process of converting a 3D game scene into a 2D image.

At the screen post-processing stage, a screen effect is added to the lighted and shaded render target, to generate the game screen. In certain embodiments, the screen effect includes, but is not limited to at least one of the following: screen-space ambient occlusion (SSAO), depth of field, shadow, rain (such as a raindrop effect and a rainwater effect), fog (such as a height fog effect and a dynamic fog effect), screen space reflection, water (such as a sea water effect, a lake water effect, and an underwater effect), tone mapping, Bloom (full-screen glow), or the like.

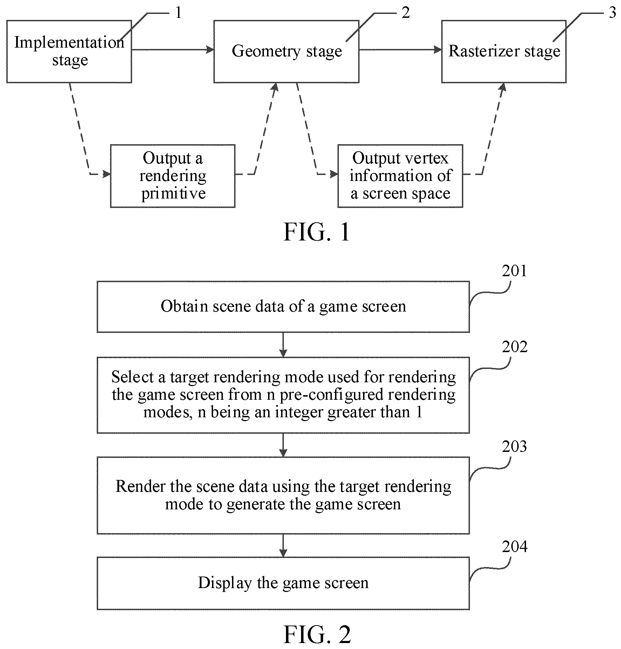

At the rendering stage, operations are performed using a rendering pipeline, to generate the render target. The render target is a 2D image. The 2D image may be referred to as a screen rendering image. The rendering pipeline is also referred to as a rendering assembly line, referring to an overall process of converting data from a 3D scene into a 2D image. As shown in FIG. 1, a related rendering stage may be subdivided into the following three stages: an implementation stage 1, a geometry stage 2, and a rasterizer stage 3. The above three stages are merely conceptual division, and each stage is usually an assembly line system.

Main tasks of the implementation stage 1 are to identify a potentially visible grid instance, and present the grid instance and a material thereof to graphics hardware for rendering. At a tail end of the implementation stage 1, geometry data is generated, including vertex coordinates, normal vectors, texture coordinates, textures, and the like. Algorithms such as collision detection, scene graph establishment, spatial octree update, and view frustum clipping may all be performed at the implementation stage 1.

Main tasks of the geometry stage 2 are vertex coordinate transformation, lighting, clipping, projection, and screen mapping. At the stage, calculation is performed based on a GPU. Vertex coordinates, colors, and texture coordinates after transformation and projection are obtained at a tail end of the geometry stage 2. Main jobs of the geometry stage 2 may be summarized as "transformation of three-dimensional vertex coordinates" and "lighting". "Transformation of three-dimensional vertex coordinates" is to transform vertex information from one coordinate system to another coordinate system through various transformation matrices, so that 3D vertex data can finally be displayed on a 2D screen. "Lighting" refers to calculating lighting attributes of vertexes through a position of a camera and a position of a light source. After the processing at the geometry stage 2 is performed, a stack of triangular patches are sent to the rasterizer stage 3, so that primitive assembly may need to be performed on the vertexes at the geometry stage 2. The primitive assembly refers to restoring a grid structure of a model according to an original connection relationship among the vertexes.

A purpose of the rasterizer stage 3 is to calculate a color value of each pixel, to correctly draw an entire image. At the rasterizer stage 3, the triangle patches sent from the geometry stage 2 are converted into fragments, and the fragments are colored. At the rasterizer stage 3, processing such as a scissor test, an alpha test, a stencil test, a depth test, alpha blending, and dithering may be performed on the fragments, to finally obtain a screen rendering image.

FIG. 2 is a flowchart of a method for rendering a game screen according to an embodiment of the present disclosure. The method may be applied to a terminal such as a mobile phone, a tablet computer, a gaming device, or a personal computer (PC). The method may include the following steps (201 to 204):

Step 201. Obtain scene data of a game screen.

The terminal obtains scene data of a game screen, the scene data being used for constructing a game scene and an element included in the game scene. For descriptions of the game scene and the element, reference may be made to the description above, and details are not described herein. In certain embodiments, the game scene is a 3D virtual scene, and the element in the game scene also exists in a 3D form.

Step 202. Select a target rendering mode used for rendering the game screen from n pre-configured rendering modes, n being an integer greater than 1.

In this embodiment of the present disclosure, a plurality of different rendering modes are pre-configured. Processing procedures corresponding to the different rendering modes are different. The terminal selects a target rendering mode used for rendering the game screen from n pre-configured rendering modes.

In a possible implementation, the terminal obtains mode selection information, the mode selection information indicating a rendering mode selected by a user; and selects a rendering mode indicated by the mode selection information as the target rendering mode used for rendering the game screen from the n pre-configured rendering modes. The user may be a game developer or designer, or may be a common user (that is, a game player). For example, three rendering modes are pre-configured, and are assumed as a first rendering mode, a second rendering mode, and a third rendering mode. If the rendering mode indicated by the mode selection information is the first rendering mode, the terminal determines the first rendering mode as the target rendering mode used for rendering the game screen.

In another possible implementation, the terminal obtains a device performance parameter of the terminal, the device performance parameter indicating computing and processing capabilities of the terminal; and selects a rendering mode matching the device performance parameter as the target rendering mode used for rendering the game screen from the n pre-configured rendering modes. In certain embodiments, the device performance parameter includes a static performance parameter and/or a dynamic performance parameter. The static performance parameter includes a hardware configuration of the terminal, that is, an inherent configuration of terminal hardware, such as a quantity of central processing unit (CPU) cores, CPU frequency, a quantity of graphics processing unit (GPU) cores, and a size of a memory. The dynamic performance parameter includes hardware usage of the terminal, that is, a parameter that dynamically changes with a terminal load, such as a CPU usage rate, a GPU usage rate, a memory occupancy rate, and a quantity of processes. In certain embodiments, a value of a device performance parameter matching each rendering mode is pre-configured. The terminal selects a target rendering mode matching a device performance parameter of the terminal from the n rendering modes according to the configuration.

In certain embodiments, when the device performance parameter includes the dynamic performance parameter, the terminal further re-obtains the dynamic performance parameter every preset duration, and adjusts the target rendering mode according to the dynamic performance parameter as re-obtained. The preset duration may be preset by the terminal or the user. For example, the preset duration is 10 minutes, 30 minutes, or 1 hour. Two adjacent preset durations may be the same or different. After re-obtaining the dynamic performance parameter, the terminal still selects a rendering mode matching the re-obtained dynamic performance parameter from the n rendering modes according to the configuration as an adjusted target rendering mode. Afterward, the terminal renders the scene data using the adjusted target rendering mode to generate the game screen. Through the above manner, the rendering mode used may be dynamically adjusted according to an actual load of the terminal. When the load permits, the terminal may select a rendering mode with higher rendering quality, to improve a display effect of the game screen as much as possible. When the load does not permit, the terminal may select a rendering mode with lower rendering quality to reduce load pressure as much as possible.

Step 203. Render the scene data using the target rendering mode, to generate the game screen.

After selecting the target rendering mode from the n pre-configured rendering modes, the terminal renders the scene data using the target rendering mode, to generate the game screen. The rendering process may include the following two stages: a rendering stage and a screen post-processing stage. At the rendering stage, the terminal constructs a 3D game scene and elements in the 3D game scene according to the scene data, and then converts the 3D game scene into a 2D image. The 2D image may be referred to as a screen rendering image. At the screen post-processing stage, the terminal adds a screen effect to the screen rendering image, to generate the game screen.

For different rendering modes, processing performed at the rendering stage may be different, and processing performed at the screen post-processing stage may also be different. For a plurality of pre-configured rendering modes and a specific processing flow corresponding to each rendering mode, description is made in the following embodiments.

Step 204. Display the game screen.

After performing rendering to generate the game screen, the terminal displays the game screen on a screen. In certain embodiments, the game screen usually includes a plurality of frames. The terminal performs rendering in turn according to scene data corresponding to each frame of the game screen to generate each frame of the game screen, and displays the game screen frame by frame.

To sum up, in the technical solution provided by this embodiment of the present disclosure, a plurality of different rendering modes are pre-configured, so that when performing rendering to generate the game screen, the terminal may select a target rendering mode to render the scene data, to generate the game screen. Rendering manners of the game screen are enriched, and individualized requirements in different scenarios are better met.

In addition, the terminal may select a suitable rendering mode from the plurality of pre-configured rendering modes according to the mode selection information or the device performance parameter of the terminal, to ensure that the finally selected rendering mode can meet customization requirements of the user or meet performance requirements of the device.

In an optional embodiment provided based on the embodiment of FIG. 2, the following three rendering modes are pre-configured: a first rendering mode, a second rendering mode, and a third rendering mode.

The first rendering mode refers to a rendering mode of performing lighting and adding a screen effect at a screen post-processing stage using a deferred rendering policy. The second rendering mode refers to a rendering mode of performing lighting at a rendering stage and adding a screen effect at the screen post-processing stage using a forward rendering policy.

A main difference between the deferred rendering policy and the forward rendering policy lies in that execution timings of the lighting are different. In the deferred rendering policy, the lighting is performed at the screen post-processing stage, while in the forward rendering policy, the lighting is performed at the rendering stage. If the terminal performs the lighting at the rendering stage, the terminal may need to calculate a lighting attribute of each vertex in the game scene. When a quantity of elements included in the game scene is relatively large, the terminal may need to calculate lighting attributes of a large quantity of vertexes. A calculation amount is large, resulting in low efficiency of the lighting. If the terminal performs the lighting at the screen post-processing stage, the terminal may only need to calculate a lighting attribute of each screen pixel, and the calculation amount of the lighting is irrelevant to the quantity of elements included in the game scene, thereby helping to reduce the calculation amount and improve the efficiency of the lighting when the quantity of elements included in the game scene is relatively large.

In addition, the third rendering mode refers to a rendering mode provided for a low-end model. The low-end model refers to a terminal device with a lower device performance parameter, such as a device performance parameter less than a preset threshold. The preset threshold may be set for different parameters. For example, a terminal with a CPU core quantity less than 2 is determined as a low-end model, and a terminal with a CPU frequency less than 1.8 GHz is determined as a low-end model. For example, in the first rendering mode and the second rendering mode, lighting and shading may be performed in a physically based rendering (PBR) manner, so that a result of the lighting and shading is more realistic. In the third rendering mode, the lighting and shading may be performed in a related rendering manner, for example, the lighting is performed using a related diffuse reflection algorithm. Compared with the performing the lighting and shading in the PBR manner, the lighting and shading is performed in the related rendering manner, to reduce requirements for device computing and processing performance and reduce the calculation amount by sacrificing a certain rendering effect. In another example, the first rendering mode and the second rendering mode may support more types of screen effects, while the third rendering mode only supports a small quantity of screen effects, to reduce the requirements for device computing and processing performance. Therefore, the third rendering mode may be regarded as a rendering mode provided for a low-end model, and has relatively low requirements for device computing and processing performance, and relatively high rendering efficiency, but relatively poor rendering effects.

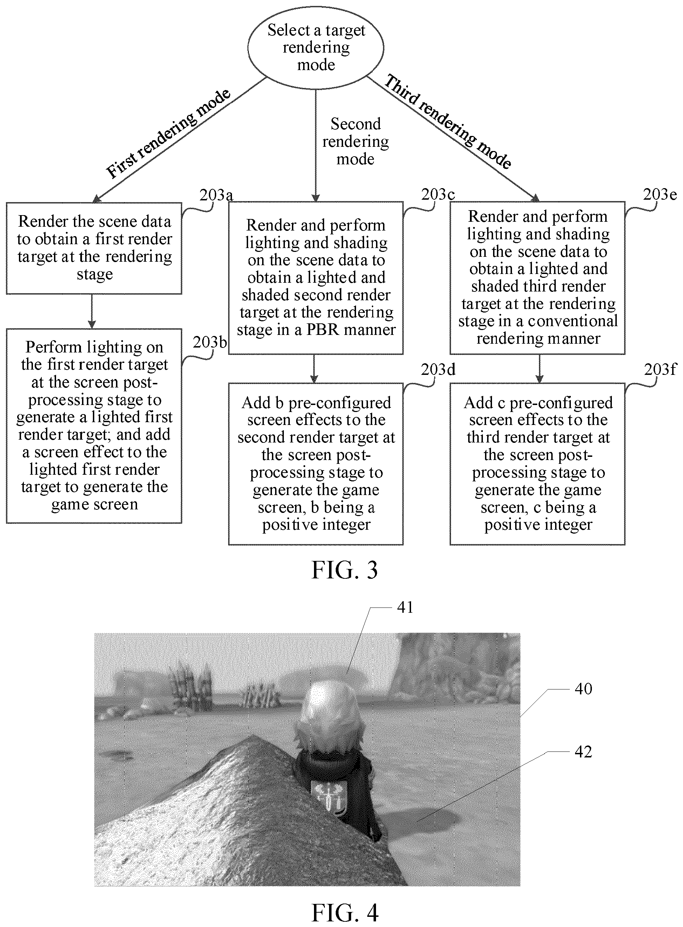

When the target rendering mode is the first rendering mode, as shown in FIG. 3, the above step 203 may include the following sub-steps (steps 203a and 203b):
Step 203a. Render the scene data to obtain a first render target at the rendering stage.

In the first rendering mode, the rendering stage may include constructing a 3D game scene and elements, performing coordinate transformation, and calculating a color value of each pixel, but does not include performing the lighting.

In certain embodiments, the first render target includes: a color texture of a main camera, depth and normal textures of the main camera, and a depth texture of a shadow camera. The step may include: rendering the scene data using the main camera, to obtain the color texture of the main camera, and the depth and normal textures of the main camera; and rendering the scene data using the shadow camera, to obtain the depth texture of the shadow camera. In certain embodiments, the terminal may use the multiple render targets (MRT) technology when rendering the scene data using the main camera. For example, a first rendering channel outputs the color texture of the main camera, and a second rendering channel outputs the depth and normal textures of the main camera. The color texture of the main camera, the depth and normal textures of the main camera, and the depth texture of the shadow camera may be stored in different buffers separately, to be extracted and used from the corresponding buffers in the screen post-processing stage.

Step 203b: Perform lighting on the first render target at the screen post-processing stage, to generate a lighted first render target; and add a screen effect to the lighted first render target, to generate the game screen.

In the first rendering mode, the terminal may perform the lighting on the first render target in the PBR manner, to obtain a more realistic lighting effect. In certain embodiments, the screen effect includes, but is not limited to at least one of the following: SSAO, depth of field, shadow, rain (such as a raindrop effect and a rainwater effect), fog (such as a height fog effect and a dynamic fog effect), screen space reflection, water (such as a sea water effect, a lake water effect, and an underwater effect), tone mapping, Bloom (full-screen glow), or the like.

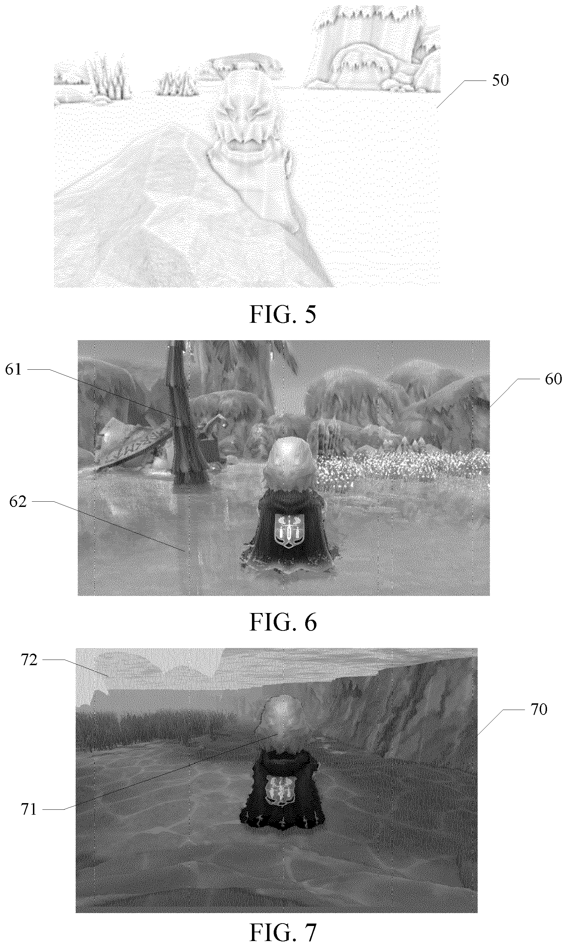

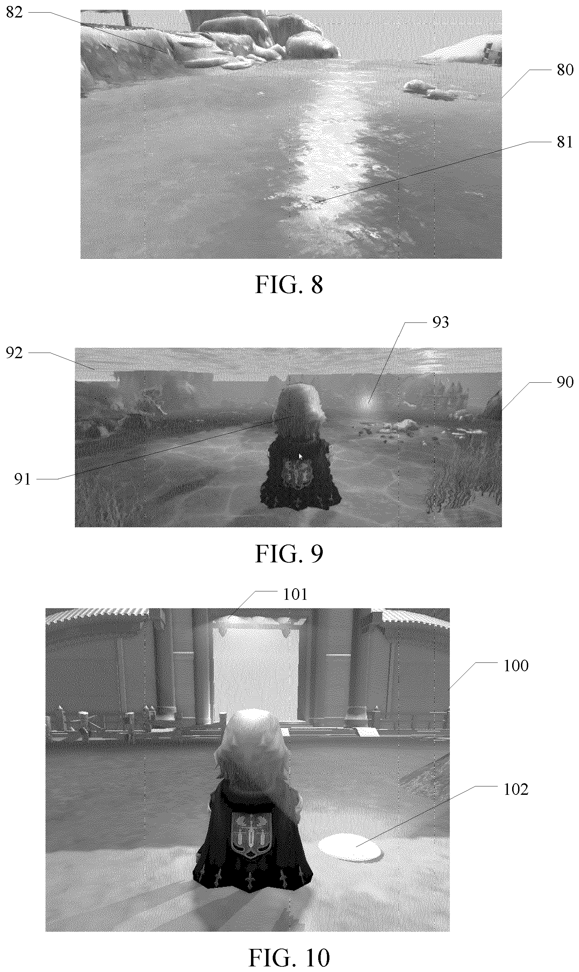

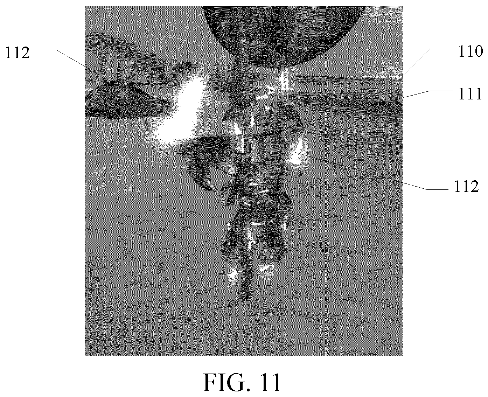

FIG. 4 to FIG. 11 are schematic exemplary diagrams of several different screen effects. In a game screen 40 shown in FIG. 4, a depth of field effect of a distant view and a height fog effect are schematically shown. A distant island 41 shown in FIG. 4 has the depth of field effect and a fog effect. In addition, FIG. 4 further schematically shows a shadow effect in the vicinity, such as a shadow effect 42 of a game character in FIG. 4. In a game screen 50 shown in FIG. 5, an SSAO effect is schematically shown. In a game screen 60 shown in FIG. 6, a water effect and a screen space reflection effect are schematically shown. In FIG. 6, a tree 61 presents a screen space reflection effect 62 in the water. In a game screen 70 shown in FIG. 7, a game character 71 is below a water surface 72. FIG. 7 schematically shows effects such as an underwater effect, an underwater fog effect, and water plant caustics. In a game screen 80 shown in FIG. 8, effects such as underground raindrops 81 and aerial raindrops 82 are schematically shown. In a game screen 90 shown in FIG. 9, a game character 91 is below a water surface 92. A light source 93 exists under the water. FIG. 9 schematically shows underwater volumetric light and a disturbance effect. In a game screen 100 shown in FIG. 10, a plurality of light sources (including a light source 101 at a door frame position and a light source 102 on the ground) and shadow effects thereof are schematically shown. In a game screen 110 shown in FIG. 11, a Bloom effect is schematically shown. Armor 111 of a game character presents the Bloom effect (as shown by a white part 112 in the figure).

In certain embodiments, a rendering pipeline pre-configured in the first rendering mode includes x types of screen effects, x being an integer greater than 1. The terminal adds a screen effect to the lighted first render target to generate the game screen according to a switch configuration corresponding to each of the x types of screen effects. When a switch configuration corresponding to an i^{th} type of screen effect in the x types of screen effects is on, the i^{th} type of screen effect is added; and when the switch configuration corresponding to the i^{th} type of screen effect is off, the i^{th} type of screen effect is not added, i being a positive integer less than or equal to x. In this embodiment of the present disclosure, the addition/non-addition of the screen effect is implemented in a switch configuration manner, to flexibly control and dynamically adjust the addition of the screen effect.

In an example, it is assumed that the pre-configured rendering pipeline includes the following three screen effects: a screen effect 1, a screen effect 2, and a screen effect 3. Meanwhile, it is assumed that switch configurations corresponding to the three screen effects are sequentially: on, off, and on. It is assumed that the lighted first render target is denoted as an "image A". The terminal first adds the screen effect 1 to the "image A" according to the switch configuration corresponding to the screen effect 1, to obtain the processed "image A". Then, the terminal determines not to add the screen effect 2 according to the switch configuration corresponding to the screen effect 2. Next, the terminal further adds the screen effect 3 to the processed "image A" according to the switch configuration corresponding to the screen effect 3, to obtain the further processed "image A", and outputs and displays the further processed "image A" as a final game screen.

In certain embodiments, the terminal may further perform the following steps before performing the lighting on the first render target to generate the lighted first render target: drawing a mask using a stencil, and then superimposing the mask on an upper layer of the first render target. The mask includes at least one UI control. The UI control may be an operation control such as a button, a slider, or a joystick, for a player to control a game character during the game. The lighting and the adding a screen effect are performed on an area, in the first render target, that is not blocked by the UI control. In other words, the lighting and/or the adding a screen effect may not be performed on an area, in the first render target, that is blocked by the UI control, to reduce calculation and processing amounts.

In certain embodiments, the lighting and/or the adding a screen effect is performed in at least one of an alternate-frame rendering manner, an alternate-pixel rendering manner, or a reduced-resolution rendering manner. By using the above manner, the calculation and processing amounts required for rendering can be reduced as much as possible while a rendering effect is ensured maximally, thereby improving the rendering efficiency.

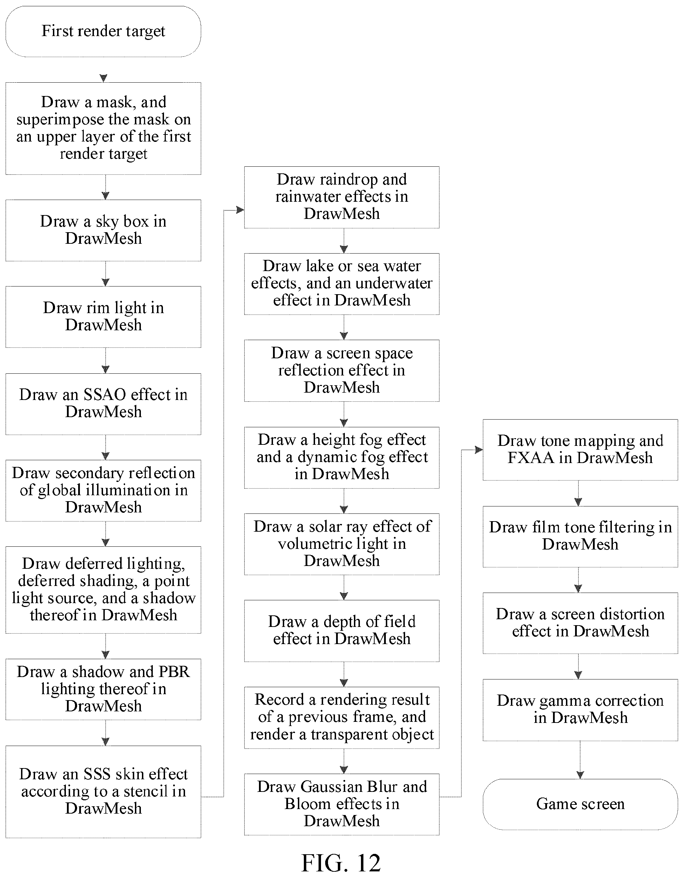

In certain embodiments, performing the lighting and/or the adding a screen effect in a DrawMesh manner can further improve processing efficiency. For example, FIG. 12 is a schematic exemplary diagram of a rendering pipeline corresponding to a screen post-processing stage of a first rendering mode.

When the target rendering mode is the second rendering mode, as shown in FIG. 3, the above step 203 may include the following sub-steps (steps 203c and 203d):
Step 203c. Render and perform lighting and shading on the scene data to obtain a lighted and shaded second render target at the rendering stage in a PBR manner.
Step 203d. Add b pre-configured screen effects to the second render target at the screen post-processing stage, to generate the game screen, b being a positive integer.

Different from the first rendering mode, in the first rendering mode, the deferred rendering policy is used to perform the lighting at the screen post-processing stage, while in the second rendering mode, the forward rendering policy is used to perform the lighting at the rendering stage. In addition, a quantity and types of screen effects included in the rendering pipeline pre-configured in the second rendering mode may be the same or different from a quantity and types of screen effects included in the rendering pipeline pre-configured in the first rendering mode.

When the target rendering mode is the third rendering mode, as shown in FIG. 3, the above step 203 may include the following sub-steps (steps 203e and 203f):
Step 203e. Render and perform lighting and shading on the scene data to obtain a lighted and shaded third render target at the rendering stage in a related rendering manner.
Step 203f. Add c pre-configured screen effects to the third render target at the screen post-processing stage, to generate the game screen, c being a positive integer.

In certain embodiments, in the third rendering mode, the lighting is performed using a related diffuse reflection algorithm, rather than performing the lighting and shading in the PBR manner, to reduce requirements for device computing and processing performance and reduce the calculation amount by sacrificing a certain rendering effect. In addition, a quantity and types of screen effects included in the rendering pipeline pre-configured in the third rendering mode may be less than those in the first rendering mode and the second rendering mode. For example, the third rendering mode merely supports a small quantity of basic screen effects, to reduce the requirements for device computing and processing performance.

Certainly, for the second rendering mode and the third rendering mode, the mask may also be drawn using a stencil. Then, the mask is superimposed on an upper layer of the second render target or the third render target. A screen effect is added to an area, in the second render target or the third render target, that is not blocked by the UI control. In other words, the adding a screen effect may not be performed on an area, in the second render target or the third render target, that is blocked by the UI control, to reduce calculation and processing amounts. In addition, for the second rendering mode and the third rendering mode, the terminal may also perform the lighting and/or the adding a screen effect using an alternate-frame rendering manner, an alternate-pixel rendering manner, a reduced-resolution rendering manner, and the like, to reduce the calculation and processing amounts required for the rendering as much as possible, and improve the rendering efficiency.

In addition, in the rendering stage, the terminal needs to transform vertexes from a view space to a clip space, that is, transform vertex coordinates from a 3D scene space to a 2D screen space through coordinate transformation. The transformation process may be implemented by a using clip matrix. The clip matrix may be also referred to as a projection matrix. A goal of the clip space is to be able to clip a primitive conveniently. A primitive completely located inside the space is retained, a primitive completely located outside the space is removed, and a primitive intersecting with a boundary of the space is clipped. The clip space is determined by a view frustum of a camera. The view frustum refers to an area in the space. The area determines a space that the camera can see. The view frustum is surrounded by six planes. The planes are also referred to as clip planes. There are two types of view frustums corresponding to two types of projections: an orthographic projection and a perspective projection. A view frustum corresponding to the orthographic projection is a quadrangular prism, and a view frustum corresponding to the perspective projection is a quadrangular frustum. Among 6 clip planes of the view frustum, a clip plane closest to the camera is referred to as a near clip plane, and a clip plane farthest from the camera is referred to as a far clip plane. The near clip plane and the far clip plane determine a depth range that the camera can see.

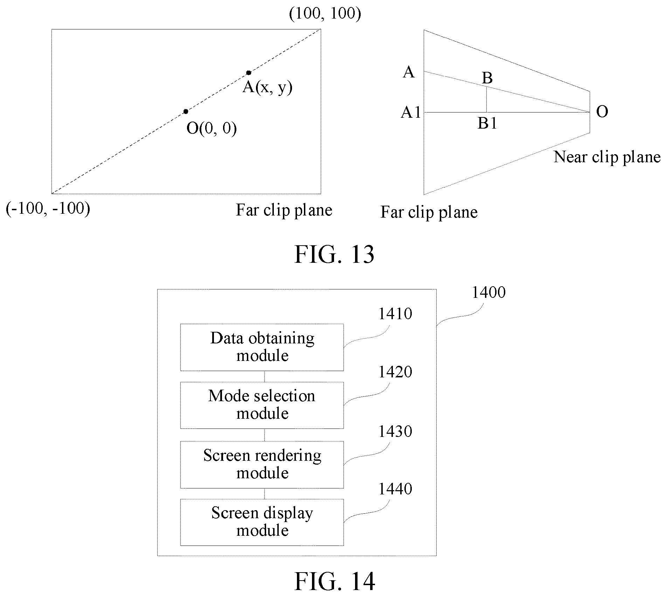

This embodiment not being part of invention provides a coordinate transformation manner, to draw a patch in the screen space, so that the patch just covers the entire screen, that is, a size of the patch is the same as a size of the screen. Then, in a vertex shader, the vertex coordinates are converted from three-dimensional coordinates to two-dimensional coordinates according to a principle of geometric transformation. There are two methods to draw the above patch, one method is to draw at the near clip plane of the camera, and the other method is to draw at the far clip plane of the camera. When calculating position coordinates, in a scene space, corresponding to a screen space pixel, the terminal may use a principle of similar triangles to first calculate position coordinates, in a far clip plane, corresponding to the screen space pixel, and then calculate the position coordinates, in the scene space, corresponding to the screen space pixel according to the position coordinates in the far clip plane and a scene depth. As shown in FIG. 13, an example of calculating position coordinates PosB, in a scene space, corresponding to a screen space pixel A is taken, PosB=PosA*DepthB, where PosA is position coordinates of the screen space pixel A in the far clip plane, and DepthB is the scene depth.

To sum up, in the technical solutions provided in the embodiments of the present disclosure, the above three different rendering modes are provided. In the first rendering mode, based on the deferred rendering policy, the lighting is performed at the screen post-processing stage using the customized rendering pipeline different from the related rendering pipeline, thereby reducing the calculation amount for the lighting and improving the efficiency of the lighting. In the second rendering mode, based on the forward rendering policy, the entire rendering process is implemented using the related rendering pipeline, thereby being compatible with the related rendering pipeline. The third rendering mode is suitable for a low-end model to use, and has relatively low requirements for device computing and processing performance, and relatively high rendering efficiency. In practical applications, a suitable rendering mode may be selected from the three different rendering modes according to actual requirements, to achieve an optimal rendering effect.

The following describes apparatus embodiments of the present disclosure, which can be used to execute the method embodiments of the present disclosure. For details not disclosed in the apparatus embodiments of the present disclosure, refer to the method embodiments of the present disclosure.

FIG. 14 is a block diagram of a game screen rendering apparatus according to an embodiment of the present disclosure. The apparatus has functions of implementing the foregoing method examples. The functions may be implemented using hardware, or may be implemented by hardware executing corresponding software. The apparatus may be the terminal described above, or may be disposed on the terminal. The apparatus 1400 may include: a data obtaining module 1410, a mode selection module 1420, a screen rendering module 1430, and a screen display module 1440.

The data obtaining module 1410 is configured to obtain scene data of a game screen, the scene data being used for constructing a game scene and an element included in the game scene.

The mode selection module 1420 is configured to select a target rendering mode used for rendering the game screen from n pre-configured rendering modes, n being an integer greater than 1.

The screen rendering module 1430 is configured to render the scene data using the target rendering mode, to generate the game screen.

The screen display module 1440 is configured to display the game screen.

To sum up, in the technical solution provided by this embodiment of the present disclosure, a plurality of different rendering modes are pre-configured, so that when performing rendering to generate the game screen, the terminal selects a target rendering mode to render the scene data, to generate the game screen. Rendering manners of the game screen are enriched, and individualized requirements in different scenarios are better met.

In an optional embodiment provided based on the embodiment in FIG. 14, the mode selection module 1420 is configured to:
obtain mode selection information, the mode selection information indicating a rendering mode selected by a user; and
select a rendering mode indicated by the mode selection information as the target rendering mode used for rendering the game screen from the n pre-configured rendering modes.

In another optional embodiment provided based on the embodiment in FIG. 14, the mode selection module 1420 is configured to:
obtain a device performance parameter of a terminal displaying the game screen, the device performance parameter including a static performance parameter and/or a dynamic performance parameter, the static performance parameter including a hardware configuration of the terminal, the dynamic performance parameter including hardware usage of the terminal; and
select a rendering mode matching the device performance parameter as the target rendering mode used for rendering the game screen from the n pre-configured rendering modes.

In certain embodiments, when the device performance parameter includes the dynamic performance parameter, the mode selection module 1420 is further configured to:
re-obtain the dynamic performance parameter every preset duration; and
adjust the target rendering mode according to the dynamic performance parameter as re-obtained.

In another optional embodiment provided based on the embodiment in FIG. 14 or any one of the foregoing optional embodiments, the n rendering modes include: a first rendering mode, a second rendering mode, and a third rendering mode, where
the first rendering mode refers to a rendering mode of performing lighting and adding a screen effect at a screen post-processing stage using a deferred rendering policy;
the second rendering mode refers to a rendering mode of performing lighting at a rendering stage and adding a screen effect at the screen post-processing stage using a forward rendering policy; and
the third rendering mode refers to a rendering mode provided for a low-end model.

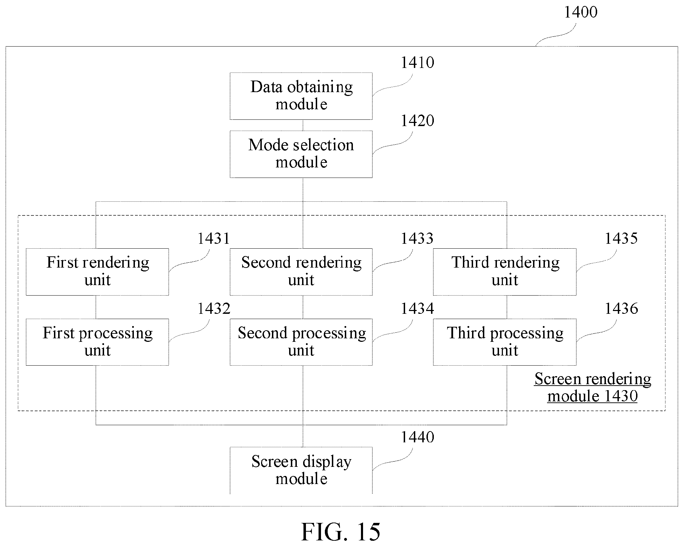

In certain embodiments, as shown in FIG. 15, the screen rendering module 1430 includes: a first rendering unit 1431 and a first processing unit 1432.

The first rendering unit 1431 is configured to render the scene data to obtain a first render target at the rendering stage when the target rendering mode is the first rendering mode.

The first processing unit 1432 is configured to perform lighting on the first render target at the screen post-processing stage, to generate a lighted first render target; and add a screen effect to the lighted first render target, to generate the game screen.

In certain embodiments, the first render target includes: a color texture of a main camera, depth and normal textures of the main camera, and a depth texture of a shadow camera. The first rendering unit 1431 is configured to render the scene data using the main camera, to obtain the color texture of the main camera, and the depth and normal textures of the main camera; and render the scene data using the shadow camera, to obtain the depth texture of the shadow camera.

In certain embodiments, a rendering pipeline pre-configured in the first rendering mode includes x types of screen effects, x being an integer greater than 1. The first processing unit 1432 is configured to add a screen effect to the lighted first render target to generate the game screen according to a switch configuration corresponding to each of the x types of screen effects. When a switch configuration corresponding to an i^{th} type of screen effect in the x types of screen effects is on, the i^{th} type of screen effect is added; and when the switch configuration corresponding to the i^{th} type of screen effect is off, the i^{th} type of screen effect is not added, i being a positive integer less than or equal to x.

In certain embodiments, the screen rendering module 1430 is further configured to: draw a mask using a stencil, the mask including at least one UI control; and superimpose the mask on an upper layer of the first render target; and the lighting and the adding a screen effect are performed on an area, in the first render target, that is not blocked by the UI control.

In certain embodiments, the lighting and/or the adding a screen effect is performed in at least one of an alternate-frame rendering manner, an alternate-pixel rendering manner, or a reduced-resolution rendering manner.

In certain embodiments, as shown in FIG. 15, the screen rendering module 1430 further includes: a second rendering unit 1433 and a second processing unit 1434.

The second rendering unit 1433 is configured to render and perform lighting and shading on the scene data to obtain a lighted and shaded second render target at the rendering stage in a physically based rendering PBR manner when the target rendering mode is the second rendering mode.

The second processing unit 1434 is configured to add b pre-configured screen effects to the second render target at the screen post-processing stage, to generate the game screen, b being a positive integer.

In certain embodiments, as shown in FIG. 15, the screen rendering module 1430 further includes: a third rendering unit 1435 and a third processing unit 1436.

The third rendering unit 1435 is configured to render and perform lighting and shading on the scene data to obtain a lighted and shaded third render target at the rendering stage in a related rendering manner when the target rendering mode is the third rendering mode.

The third processing unit 1436 is configured to add c pre-configured screen effects to the third render target at the screen post-processing stage, to generate the game screen, c being a positive integer.

When the apparatus provided in the foregoing embodiments implements functions of the apparatus, it is illustrated with an example of division of each functional module. In the practical application, the function distribution may be finished by different functional modules according to the requirements, that is, the internal structure of the device is divided into different functional modules, to implement all or some of the functions described above. In addition, the apparatus and method embodiments provided in the foregoing embodiments belong to one conception. For the specific implementation process, refer to the method embodiments, and details are not described herein again.

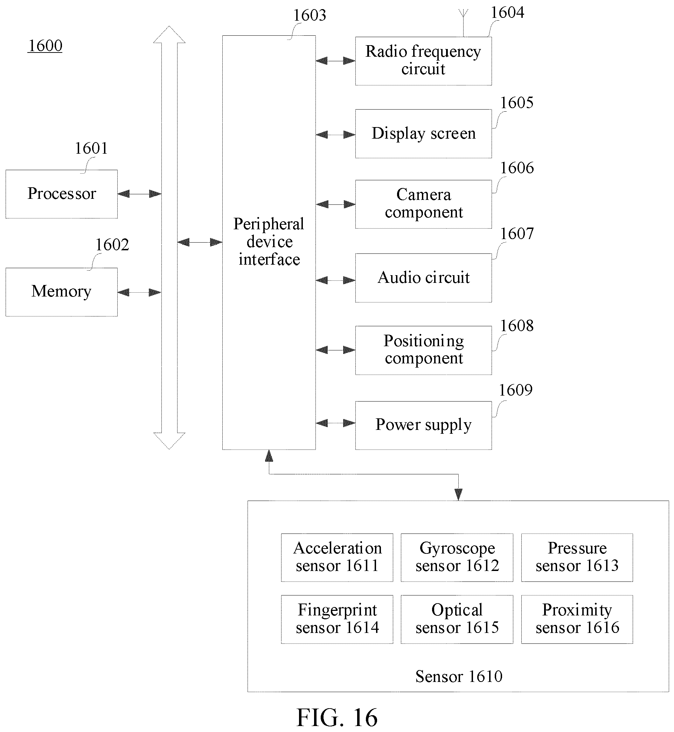

FIG. 16 is a structural block diagram of a terminal 1600 according to an embodiment of the present disclosure. The terminal 1600 may be an electronic device such as a mobile phone, a tablet computer, a gaming device, or a PC.

Generally, the terminal 1600 includes a processor 1601 and a memory 1602.

The processor 1601 may include one or more processing cores, and may be, for example, a 4-core processor or an 8-core processor. The processor 1601 may be implemented using at least one hardware form of a digital signal processor (DSP), a field programmable gate array (FPGA), and a programmable logic array (PLA). The processor 1601 may alternatively include a main processor and a coprocessor. The main processor is a processor that is configured to process data in an awake state, also referred to as a central processing unit (CPU), and the coprocessor is a low-power processor that is configured to process data in an idle state. In some embodiments, the processor 1601 may be integrated with a graphics processing unit (GPU). The GPU is configured to be responsible for rendering and drawing content that a display needs to display. In some embodiments, the processor 1601 may further include an artificial intelligence (AI) processor. The AI processor is configured to process a calculation operation related to machine learning.

The memory 1602 may include one or more computer-readable storage media that may be non-transitory. The memory 1602 may further include a high-speed random access memory and a non-volatile memory, for example, one or more disk storage devices or flash memory devices. In some embodiments, the non-transient computer-readable storage medium in the memory 1602 is configured to store at least one computer-readable instruction, and the at least one computer-readable instruction is configured to be executed by the processor 1601 to implement the method for rendering the game screen provided in the method embodiment of the present disclosure.

In some embodiments, the terminal 1600 may alternatively include: a peripheral interface 1603 and at least one peripheral. The processor 1601, the memory 1602, and the peripheral interface 1603 may be connected through a bus or a signal cable. Each peripheral may be connected to the peripheral interface 1603 through a bus, a signal cable, or a circuit board. Specifically, the peripheral device includes at least one of a radio frequency circuit 1604, a touch display screen 1605, a camera 1606, an audio circuit 1607, a positioning component 1608, or a power supply 1609.

The peripheral device interface 1603 may be configured to connect the at least one peripheral device related to input/output (I/O) to the processor 1601 and the memory 1602. In some embodiments, the processor 1601, the memory 1602, and the peripheral device interface 1603 are integrated on a same chip or circuit board. In some other embodiments, any one or two of the processor 1601, the memory 1602, and the peripheral device interface 1603 may be implemented on a separate chip or the circuit board. This is not limited in this embodiment.

The radio frequency circuit 1604 is configured to receive and transmit a radio frequency (RF) signal, also referred to as an electromagnetic signal. The RF circuit 1604 communicates with a communication network and another communication device using the electromagnetic signal. The RF circuit 1604 converts an electric signal into an electromagnetic signal for transmission, or converts a received electromagnetic signal into an electric signal. In certain embodiments, the RF circuit 1604 includes: an antenna system, an RF transceiver, one or more amplifiers, a tuner, an oscillator, a digital signal processor, a codec chip set, a subscriber identity module card, and the like. The RF circuit 1604 may communicate with other devices through at least one wireless communication protocol. The wireless communication protocol includes, but is not limited to: a metropolitan area network, generations of mobile communication networks (2G, 3G, 4G, and 5G), a wireless local area network and/or a wireless fidelity (Wi-Fi) network. In some embodiments, the RF circuit 1604 may further include a circuit related to a near field communication (NFC) related circuit. This is not limited in the present disclosure.

The display screen 1605 is configured to display a user interface (UI). The UI may include a graph, text, an icon, a video, and any combination thereof. When the display screen 1605 is a touch display screen, the display screen 1605 also has the capability to collect a touch signal on or above a surface of the display screen 1605. The touch signal may be used as a control signal to be inputted into the processor 1601 for processing. In this case, the display screen 1605 may be further configured to provide a virtual button and/or a virtual keyboard that are/is also referred to as a soft button and/or a soft keyboard. In some embodiments, there may be one display screen 1605, disposed on a front panel of the terminal 1600. In some other embodiments, there may be two display screens 1605, respectively disposed on different surfaces of the terminal 1600 or designed in a foldable shape. In still some other embodiments, the display screen 1605 may be a flexible display screen, disposed on a curved surface or a folded surface of the terminal 1600. The display screen 1605 may also be set to a non-rectangular irregular pattern, that is, a special-shaped screen. The display screen 1605 may be made of materials such as a liquid crystal display (LCD), an organic light-emitting diode (OLED), and the like.

The camera assembly 1606 is configured to collect images or videos. In certain embodiments, the camera component 1606 includes a front-facing camera and a rear-facing camera. Generally, the front-facing camera is disposed on the front panel of the computing device, and the rear-facing camera is disposed on a back face of the computing device. In some embodiments, there are at least two rear cameras, which are respectively any of a main camera, a depth-of-field camera, a wide-angle camera, and a telephoto camera, to achieve background blur through fusion of the main camera and the depth-of-field camera, panoramic photographing and virtual reality (VR) photographing through fusion of the main camera and the wide-angle camera, or other fusion photographing functions. In some embodiments, the camera component 1606 may further include a flash. The flashlight may be a single-color-temperature flashlight or a dual-color-temperature flashlight. The dual-color-temperature flashlight is a combination of a warm flashlight and a cold flashlight, which may be used for light compensation at different color temperatures.

The audio circuit 1607 may include a microphone and a speaker. The microphone is configured to collect sound waves of a user and an environment, and convert the sound waves into electrical signals and input the electrical signals into the processor 1601 for processing, or input the electrical signals into the RF circuit 1604 to implement speech communication. For the purpose of stereo collection or noise reduction, there may be a plurality of microphones, disposed at different portions of the terminal 1600 respectively. The microphone may be further an array microphone or an omni-directional collection type microphone. The speaker is configured to convert electrical signals from the processor 1601 or the RF circuit 1604 into sound waves. The speaker may be a thin-film speaker or a piezoelectric ceramic speaker. When the speaker is the piezoelectric ceramic speaker, electric signals not only may be converted into sound waves that can be heard by human, but also may be converted into sound waves that cannot be heard by human for ranging and the like. In some embodiments, the audio circuit 1607 may further include an earphone jack.

The positioning component 1608 is configured to determine a current geographic location of the terminal 1600, to implement a navigation or a location based service (LBS). The positioning component 1608 may be a positioning component based on the global positioning system (GPS) of the United States, the BeiDou Navigation Satellite System (BDS) of China, the GLONASS System of Russia, or the GALILEO System of the European Union.

The power supply 1609 is configured to supply power to components in the terminal 1600. The power supply 1609 may be an alternating current, a direct current, a primary battery, or a rechargeable battery. When the power supply 1609 includes the rechargeable battery, the rechargeable battery may be a wired charging battery or a wireless charging battery. The rechargeable battery may be further configured to support a fast charging technology.

In some embodiments, the terminal 1600 may further include one or more sensors 1610. The one or more sensors 1610 include, but are not limited to, an acceleration sensor 1611, a gyroscope sensor 1612, a pressure sensor 1613, a fingerprint sensor 1614, an optical sensor 1615, and a proximity sensor 1616.

The acceleration sensor 1611 may detect the magnitude of acceleration on three coordinate axes of a coordinate system established with the terminal 1600. For example, the acceleration sensor 1611 may be configured to detect components of gravity acceleration on the three coordinate axes. The processor 1601 may control, according to a gravity acceleration signal collected by the acceleration sensor 1611, the touch display screen 1605 to display the user interface in a frame view or a portrait view. The acceleration sensor 1611 may be further configured to collect data of a game or a user movement.

The gyroscope sensor 1612 may detect a body direction and a rotation angle of the terminal 1600. The gyroscope sensor 1612 may cooperate with the acceleration sensor 1611 to collect a 3D action by the user on the terminal 1600. The processor 1601 may implement the following functions according to the data collected by the gyroscope sensor 1612: motion sensing (such as changing the UI according to a tilt operation of the user), image stabilization at shooting, game control, and inertial navigation.

The pressure sensor 1613 may be disposed at a side frame of the terminal 1600 and/or a lower layer of the touch display screen 1605. When the pressure sensor 1613 is disposed at the side frame of the terminal 1600, a holding signal of the user on the terminal 1600 may be detected. The processor 1601 performs left and right hand recognition or a quick operation according to the holding signal collected by the pressure sensor 1613. When the pressure sensor 1613 is disposed at the lower layer of the touch display screen 1605, the processor 1601 controls, according to a pressure operation of the user on the touch display screen 1605, an operable control on the UI. The operable control includes at least one of a button control, a scroll-bar control, an icon control, or a menu control.

The fingerprint sensor 1614 is configured to collect a fingerprint of a user, and the processor 1601 recognizes an identity of the user according to the fingerprint collected by the fingerprint sensor 1614, or the fingerprint sensor 1614 recognizes the identity of the user based on the collected fingerprint. When the identity of the user is recognizes as credible, the processor 1601 authorizes the user to perform a related sensitive operation. The sensitive operation includes screen unlocking, viewing of encrypted information, software downloading, payment, setting changing, and the like. The fingerprint sensor 1614 may be disposed on a front surface, a back surface, or a side surface of the terminal 1600. When a physical button or a vendor logo is disposed on the terminal 1600, the fingerprint 1614 may be integrated with the physical button or the vendor logo.

The optical sensor 1615 is configured to collect ambient light intensity. In an embodiment, the processor 1601 may control display brightness of the touch display 1605 according to the ambient light intensity collected by the optical sensor 1615. Specifically, when the ambient light intensity is relatively high, the display luminance of the touch display screen 1605 is increased. When the ambient light intensity is relatively low, the display luminance of the touch display screen 1605 is reduced. In another embodiment, the processor 1601 may further dynamically adjust a photographing parameter of the camera assembly 1606 according to the ambient light intensity collected by the optical sensor 1615.

The proximity sensor 1616, also referred to as a distance sensor, is usually disposed on a front panel of the terminal 1600. The proximity sensor 1616 is configured to collect a distance between the user and the front surface of the terminal 1600. In an embodiment, when the proximity sensor 1616 detects that the distance between the user and the front surface of the terminal 1600 gradually becomes smaller, the touch display screen 1605 is controlled by the processor 1601 to switch from a screen-on state to a screen-off state. When the proximity sensor 1616 detects that the distance between the user and the front surface of the terminal 1600 gradually becomes larger, the touch display screen 1605 is controlled by the processor 1601 to switch from the screen-off state to the screen-on state.

A person skilled in the art may understand that a structure shown in FIG. 16 constitutes no limitation on the terminal 1600, and the terminal may include more or fewer components than those shown in the figure, or some components may be combined, or a different component deployment may be used.

In an exemplary embodiment, a terminal is further provided, including a processor and a memory, the memory storing at least one computer-readable instruction, at least one program, a code set, or a computer-readable instruction set. The at least one computer-readable instruction, the at least one program, the code set, or the computer-readable instruction set is configured to be executed by one or more processors to perform the method for rendering the game screen provided in the foregoing embodiment.

In an exemplary embodiment, a computer-readable storage medium is further provided, the storage medium storing at least one computer-readable instruction, at least one program, a code set, or a computer-readable instruction set, and the at least one computer-readable instruction, the at least one program, the code set, or the computer-readable instruction set, when executed by a processor of a computer device, performing the method for rendering the game screen provided in the foregoing embodiment. In certain embodiments, the computer-readable storage medium may be a ROM, a RAM, a CD-ROM, a magnetic tape, a floppy disk, an optical data storage device, or the like.

In an exemplary embodiment, a computer program product is further provided, when executed, the computer program product being configured to perform the method for rendering the game screen provided in the foregoing embodiment.

## Claims

1. A method for rendering a game screen, performed by a terminal, the method comprises:
obtaining (201) scene data of a game screen, the scene data being used for constructing a game scene and an element comprised in the game scene;
selecting (202) a target rendering mode used for rendering the game screen from n pre-configured rendering modes, n being an integer greater than 1;
rendering (203) the scene data using the target rendering mode to generate the game screen; and
displaying (204) the game screen, **characterized in that**
the n pre-configured rendering modes comprise a first rendering mode, a second rendering mode, and a third rendering mode, wherein
the first rendering mode refers to a rendering mode of performing lighting and adding a screen effect at a screen post-processing stage using a deferred rendering policy;
the second rendering mode refers to a rendering mode of performing lighting at a rendering stage and adding a screen effect at the screen post-processing stage using a forward rendering policy; and
the third rendering mode refers to a rendering mode provided for a low-end model rendering (203) the scene data using the target rendering mode to generate the game screen comprises:
rendering (203) the scene data to obtain a first render target at the rendering stage when the target rendering mode is the first rendering mode; and
performing lighting on the first render target at the screen post-processing stage to generate a lighted first render target; and
adding a screen effect to the lighted first render target to generate the game screen; and wherein the first render target comprises: a color texture of a main camera, depth and normal textures of the main camera, and a depth texture of a shadow camera; and
wherein rendering (203) the scene data to obtain the first render target comprises:
rendering the scene data using the main camera, to obtain the color texture of the main camera, and the depth and normal textures of the main camera; and
rendering (203) the scene data using the shadow camera, to obtain the depth texture of the shadow camera.

2. The method of claim 1, wherein selecting (202) the target rendering mode used for rendering the game screen from the n pre-configured rendering modes comprises:
obtaining mode selection information, the mode selection information indicating a rendering mode selected by a user; and
selecting the rendering mode indicated by the mode selection information as the target rendering mode used for rendering the game screen from the n pre-configured rendering modes.

3. The method of claim 1, wherein selecting (202) the target rendering mode used for rendering the game screen from the n pre-configured rendering modes comprises:
obtaining a device performance parameter of a terminal displaying the game screen, the device performance parameter comprising at least one of a static performance parameter or a dynamic performance parameter, the static performance parameter comprising hardware configuration information of the terminal, and the dynamic performance parameter comprising hardware dynamic load information of the terminal; and
selecting a rendering mode matching the device performance parameter as the target rendering mode used for rendering the game screen from the n pre-configured rendering modes.

4. The method of claim 3, wherein when the device performance parameter comprises the dynamic performance parameter, the method further comprises: after selecting the rendering mode matching the device performance parameter as the target rendering mode used for rendering the game screen from the n pre-configured rendering modes,
re-obtaining the dynamic performance parameter every preset duration; and
adjusting the target rendering mode according to the dynamic performance parameter as re- obtained.

5. The method of claim 1, wherein a rendering pipeline pre-configured in the first rendering mode comprises x types of screen effects, x being an integer greater than 1; and
wherein adding the screen effect to the lighted first render target to generate the game screen comprises:
adding a screen effect to the lighted first render target to generate the game screen according to a switch configuration corresponding to each of the x types of screen effects, wherein
when a switch configuration corresponding to an i^{th} type of screen effect in the x types of screen effects is on, the i^{th} type of screen effect is added; and when the switch configuration corresponding to the i^{th} type of screen effect is off, the i^{th} type of screen effect is not added, i being a positive integer less than or equal to x.

6. The method of claim 1, further comprising: before performing lighting on the first render target to generate the lighted first render target,
drawing a mask using a stencil, the mask comprising at least one UI control; and
superimposing the mask on an upper layer of the first render target, wherein
the lighting and/or the adding the screen effect are performed on an area, in the first render target, that is not blocked by the UI control.

7. The method of claim 1, wherein the lighting and/or the adding the screen effect is performed in at least one of an alternate-frame rendering manner, an alternate-pixel rendering manner, or a reduced-resolution rendering manner.

8. The method of claim 1, wherein rendering (203) the scene data using the target rendering mode to generate the game screen comprises:
rendering and performing lighting and shading on the scene data to obtain a lighted and shaded second render target at the rendering stage in a physically based rendering PBR manner when the target rendering mode is the second rendering mode; and
adding b pre-configured screen effects to the second render target at the screen post-processing stage to generate the game screen, b being a positive integer.

9. The method of claim 1, wherein rendering (203) the scene data using the target rendering mode to generate the game screen comprises:
rendering and performing lighting and shading on the scene data to obtain a lighted and shaded third render target at the rendering stage in a related rendering manner when the target rendering mode is the third rendering mode; and
adding c pre-configured screen effects to the third render target at the screen post-processing stage to generate the game screen, c being a positive integer.

10. An apparatus, arranged for implementing the method for rendering the game screen of any one of claims 1 to 9.

11. A terminal, comprising a memory and one or more processors, the memory storing computer-readable instructions, the computer-readable instructions, when executed by the one or more processors, causing the one or more processors to perform the method for rendering the game screen of any one of claims 1 to 9.

12. One or more non-transitory computer-readable storage mediums storing computer-readable instructions, the computer-readable instructions, when executed by one or more processors, causing the one or more processors to perform the method for rendering the game screen of any one of claims 1 to 9.

## Patentansprüche

1. Verfahren zum Rendern eines Spielbildschirms, das von einem Endgerät durchgeführt wird, wobei das Verfahren Folgendes umfasst:
Erhalten (201) von Szenendaten eines Spielbildschirms, wobei die Szenendaten zum Konstruieren einer Spielszene und eines Elements, das in der Spielszene umfasst ist, verwendet werden;
Auswählen (202) eines Zielrenderingmodus, der zum Rendern des Spielbildschirms aus n vorausgelegten Renderingmodi verwendet wird, wobei n eine Ganzzahl größer als 1 ist;
Rendern (203) der Szenendaten unter Verwendung des Zielrenderingmodus, um den Spielbildschirm zu erzeugen; und
Anzeigen (204) des Spielbildschirms, **dadurch gekennzeichnet, dass**
die n vorausgelegten Renderingmodi einen ersten Renderingmodus, einen zweiten Renderingmodus und einen dritten Renderingmodus umfassen, wobei
der erste Renderingmodus sich auf einen Renderingmodus zum Durchführen eines Beleuchtens und Hinzufügens eines Bildschirmeffekts in einer Bildschirmnachverarbeitungsphase unter Verwendung einer verzögerten Renderingrichtlinie bezieht;
der zweite Renderingmodus sich auf einen Renderingmodus zum Durchführen eines Beleuchtens in einer Renderingphase und eines Hinzufügens eines Bildschirmeffekts in der Bildschirmnachverarbeitungsphase unter Verwendung einer Vorwärtsrenderingrichtlinie bezieht; und
der dritte Renderingmodus sich auf einen Renderingmodus bezieht, der für ein Low-End-Modellrendering (203) bereitgestellt wird, wobei das Verwenden der Szenendaten des Zielrenderingmodus, um den Spielbildschirm zu erzeugen, Folgendes umfasst:
Rendern (203) der Szenendaten, um ein erstes Renderingziel in der Renderingphase zu erhalten, wenn der Zielrenderingmodus der erste Renderingmodus ist; und
Durchführen eines Beleuchtens des ersten Renderingziels in der Bildschirmnachverarbeitungsphase, um ein beleuchtetes erstes Renderingziel zu erzeugen; und
Hinzufügen eines Bildschirmeffekts zum beleuchteten ersten Renderingziel, um den Spielbildschirm zu erzeugen;
und wobei das erste Renderingziel Folgendes umfasst: eine Farbtextur einer Hauptkamera, eine Tiefen- und Normaltextur der Hauptkamera und eine Tiefentextur einer Schattenkamera; und
wobei das Rendern (203) der Szenendaten, um das erste Renderingziel zu erhalten, Folgendes umfasst:
Rendern der Szenendaten unter Verwendung der Hauptkamera war, um die Farbtextur der Hauptkamera und die Tiefen- und Normaltextur der Hauptkamera zu erhalten; und
Rendern (203) der Szenendaten unter Verwendung der Schattenkamera, um die Tiefentextur der Schattenkamera zu erhalten.

2. Verfahren nach Anspruch 1, wobei das Auswählen (202) des Zielrenderingmodus, der zum Rendern des Spielbildschirms verwendet wird, aus den n vorausgelegten Renderingmodi Folgendes umfasst:
Erhalten von Modusauswahlinformationen, wobei die Modusauswahlinformationen einen von einem Benutzer ausgewählten Renderingmodus anzeigen; und
Auswählen des Renderingmodus, der von den Modusauswahlinformationen angezeigt wird, als den Zielrenderingmodus, der zum Rendern des Spielbildschirms verwendet wird, aus den n vorausgelegten Renderingmodi.

3. Verfahren nach Anspruch 1, wobei das Auswählen (202) des Zielrenderingmodus, der zum Rendern des Spielbildschirms verwendet wird, aus den n vorausgelegten Renderingmodi Folgendes umfasst:
Erhalten eines Vorrichtungsleistungsparameters eines Endgeräts, das den Spielbildschirm anzeigt, wobei der Vorrichtungsleistungsparameter mindestens eines von einem statischen Leistungsparameter oder einem dynamischen Leistungsparameter umfasst, wobei der statische Leistungsparameter Hardwareauslegungsinformationen des Endgeräts umfasst und der dynamische Leistungsparameter Hardwaredynamikauslastungsinformationen des Endgeräts anzeigt; und
Auswählen eines Renderingmodus, der mit dem Vorrichtungsleistungsparameter übereinstimmt, als den Zielrenderingmodus, der zum Rendern des Spielbildschirms verwendet wird, aus den n vorausgelegten Renderingmodi.

4. Verfahren nach Anspruch 3, wobei das Verfahren, wenn der Vorrichtungsleistungsparameter den dynamischen Leistungsparameter umfasst, ferner Folgendes umfasst: nach dem Auswählen des Renderingmodus, der mit dem Vorrichtungsleistungsparameter übereinstimmt, als den Zielrenderingmodus, der zum Rendern des Spielbildschirms verwendet wird, aus den n vorausgelegten Renderingmodi,
erneutes Erhalten des dynamischen Leistungsparameters bei jeder voreingestellten Dauer; und
Anpassen des Zielrenderingmodus gemäß des erneut erhaltenen dynamischen Leistungsparameters.

5. Verfahren nach Anspruch 1, wobei eine Renderingpipeline, die im ersten Renderingmodus vorausgelegt ist, x Arten von Bildschirmeffekten umfasst, wobei x eine Ganzzahl größer als 1 ist; und
wobei das Hinzufügen des Bildschirmeffekts zum beleuchteten ersten Renderingziel, um den Spielbildschirm zu erzeugen, Folgendes umfasst:
Hinzufügen eines Bildschirmeffekts zum beleuchteten ersten Renderingziel, um einen Spielbildschirm gemäß einer Umschaltauslegung zu erzeugen, die jedem der x Arten von Bildschirmeffekten entspricht, wobei
wenn eine Umschaltauslegung, die einer i-ten Art eines Bildschirmeffekts in den x Arten von Bildschirmeffekten entspricht, eingeschaltet ist, die i-te Art eines Bildschirmeffekts hinzugefügt wird; und wenn die Umschaltauslegung, die der i-ten Art eines Bildschirmeffekts entspricht, ausgeschaltet ist, die i-te Art eines Bildschirmeffekts nicht hinzugefügt wird, wobei i eine positive Ganzzahl ist, die kleiner als oder gleich x ist.

6. Verfahren nach Anspruch 1, das vor dem Durchführen eines Beleuchtens am ersten Renderingziel, um das beleuchtete erste Renderingziel zu erzeugen, ferner Folgendes umfasst,
Zeichnen einer Maske unter Verwendung einer Schablone, wobei die Maske mindestens eine UI-Steuerung umfasst; und
Überlagern der Maske auf einer oberen Schicht des ersten Renderingziels, wobei
das Beleuchten und/oder das Hinzufügen des Bildschirmeffekts in einem Bereich im ersten Renderingziel durchgeführt werden, der von der UI-Steuerung nicht blockiert wird.

7. Verfahren nach Anspruch 1, wobei das Beleuchten und/oder das Hinzufügen des Bildschirmeffekts in mindestens einem von einer Renderingweise von abwechselnden Frames, einer Renderingweise von abwechselnden Pixeln oder einer Renderingweise einer reduzierten Auflösung durchgeführt wird.

8. Verfahren nach Anspruch 1, wobei das Rendern (203) der Szenendaten unter Verwendung des Zielrenderingmodus, um den Spielbildschirm zu erzeugen, Folgendes umfasst:
Rendern und Durchführen eines Beleuchtens und eines Schattierens an den Szenendaten, um ein beleuchtetes und schattiertes zweites Renderingziel in der Renderingphase in einer physisch basierten PBR-Renderingweise zu erhalten, wenn der Zielrenderingmodus der zweite Renderingmodus ist; und
Hinzufügen von b vorausgelegten Bildschirmeffekten zum zweiten Renderingziel in der Bildschirmnachverarbeitungsphase, um den Spielbildschirm zu erzeugen, wobei b eine positive Ganzzahl ist.

9. Verfahren nach Anspruch 1, wobei das Rendern (203) der Szenendaten unter Verwendung des Zielrenderingmodus, um den Spielbildschirm zu erzeugen, Folgendes umfasst:
Rendern und Durchführen eines Beleuchtens und eines Schattierens an den Szenendaten, um ein beleuchtetes und schattiertes drittes Renderingziel in der Renderingphase in einer artverwandten Renderingweise zu erhalten, wenn der Zielrenderingmodus der dritte Renderingmodus ist; und
Hinzufügen von c vorausgelegten Bildschirmeffekten zum dritten Renderingziel in der Bildschirmnachverarbeitungsphase, um den Spielbildschirm zu erzeugen, wobei c eine positive Ganzzahl ist.

10. Vorrichtung, die zum Implementieren des Verfahrens zum Rendern des Spielbildschirms nach einem der Ansprüche 1 bis 9 angeordnet ist.

11. Endgerät, das einen Speicher und einen oder mehrere Prozessoren umfasst, wobei im Speicher computerlesbare Anweisungen gespeichert sind, wobei die computerlesbaren Anweisungen, wenn sie von dem einen oder den mehreren Prozessoren ausgeführt werden, den einen oder die mehreren Prozessoren veranlassen, das Verfahren zum Rendern des Spielbildschirms nach einem der Ansprüche 1 bis 9 durchzuführen.

12. Ein oder mehrere nichttransitorische computerlesbare Speichermedien, in denen computerlesbare Anweisungen gespeichert sind, wobei die computerlesbaren Anweisungen, wenn sie von einem oder mehreren Prozessoren ausgeführt werden, den einen oder die mehreren Prozessoren veranlassen, das Verfahren zum Rendern des Spielbildschirms nach einem der Ansprüche 1 bis 9 durchzuführen.

## Revendications

1. Procédé de rendu d'écran de jeu, réalisé par un terminal, le procédé comprend :
l'obtention (201) de données de scène d'un écran de jeu, les données de scène étant utilisées pour construire une scène de jeu et un élément compris dans la scène de jeu ;
la sélection (202), dans n modes de rendu préconfigurés, d'un mode de rendu cible utilisé pour rendre l'écran de jeu, n étant un nombre entier supérieur à 1 ;
le rendu (203) des données de scène en utilisant le mode de rendu cible pour générer l'écran de jeu ; et
l'affichage (204) de l'écran de jeu, **caractérisé en ce que**
les n modes de rendu préconfigurés comprennent un premier mode de rendu, un deuxième mode de rendu et un troisième mode de rendu, dans lequel
le premier mode de rendu se réfère à un mode de rendu consistant à réaliser un éclairage et à ajouter un effet d'écran à un stade de post-traitement d'écran en utilisant une politique de rendu différée ;
le deuxième mode de rendu se réfère à un mode de rendu consistant à réaliser un éclairage à un stade de rendu et à ajouter un effet d'écran au stade de post-traitement d'écran en utilisant une politique de rendu avancée ; et
le troisième mode de rendu se réfère à un mode de rendu prévu pour un modèle bas de gamme,
le rendu (203) des données de scène en utilisant le mode de rendu cible pour générer l'écran de jeu comprend :
le rendu (203) des données de scène pour obtenir une première cible de rendu au stade de rendu lorsque le mode de rendu cible est le premier mode de rendu ; et
la réalisation d'un éclairage sur la première cible de rendu au stade de post-traitement d'écran pour générer une première cible de rendu éclairée ; et
l'ajout d'un effet d'écran à la première cible de rendu éclairée pour générer l'écran de jeu ;
et dans lequel la première cible de rendu comprend : une texture de couleur d'une caméra principale, des textures de profondeur et de normalité de la caméra principale, et une texture de profondeur d'une caméra d'ombre ; et
dans lequel le rendu (203) des données de scène pour obtenir la première cible de rendu comprend :
le rendu des données de scène en utilisant la caméra principale pour obtenir la texture de couleur de la caméra principale et les textures de profondeur et de normalité de la caméra principale ; et
le rendu (203) des données de scène en utilisant la caméra d'ombre pour obtenir la texture de profondeur de la caméra d'ombre.

2. Procédé selon la revendication 1, dans lequel la sélection (202), dans les n modes de rendu préconfigurés, du mode de rendu cible utilisé pour rendre l'écran de jeu comprend :
l'obtention d'informations de sélection de mode, les informations de sélection de mode indiquant un mode de rendu sélectionné par un utilisateur ; et
la sélection, dans les n modes de rendu préconfigurés, du mode de rendu indiqué par le informations de sélection de mode en tant que mode de rendu cible utilisé pour rendre l'écran de jeu.

3. Procédé selon la revendication 1, dans lequel la sélection (202), dans les n modes de rendu préconfigurés, du mode de rendu cible utilisé pour rendre l'écran de jeu comprend :
l'obtention d'un paramètre de performance de dispositif d'un terminal affichant l'écran de jeu, le paramètre de performance de dispositif comprenant au moins un parmi un paramètre de performance statique ou un paramètre de performance dynamique, le paramètre de performance statique comprenant des informations de configuration matérielle du terminal, et le paramètre de performance dynamique comprenant des informations de charge dynamique matérielle du terminal ; et
la sélection, dans les n modes de rendu préconfigurés, d'un mode de rendu apparié au paramètre de performance de dispositif en tant que mode de rendu cible utilisé pour rendre l'écran de jeu.

4. Procédé selon la revendication 3, dans lequel lorsque le paramètre de performance de dispositif comprend le paramètre de performance dynamique, le procédé comprend en outre : après la sélection, dans les n modes de rendu préconfigurés, du mode de rendu apparié au paramètre de performance de dispositif en tant que mode de rendu cible utilisé pour rendre l'écran de jeu,
l'obtention à nouveau du paramètre de performance dynamique à chaque durée prédéfinie ; et
l'ajustement du mode de rendu cible selon le paramètre de performance dynamique obtenu à nouveau.

5. Procédé selon la revendication 1, dans lequel un pipeline de rendu préconfiguré dans le premier mode de rendu comprend x types d'effets d'écran, x étant un nombre entier supérieur à 1 ; et
dans lequel l'ajout de l'effet d'écran à la première cible de rendu éclairée pour générer l'écran de jeu comprend :
l'ajout d'un effet d'écran à la première cible de rendu éclairée pour générer l'écran de jeu selon une configuration de commutation correspondant à chacun des x types d'effets d'écran, dans lequel
lorsqu'une configuration de commutation correspondant à un i^{ème} type d'effet d'écran des x types d'effets d'écran est "marche", le i^{ème} type d'effet d'écran est ajouté ; et lorsque la configuration de commutation correspondant au i^{ème} type d'effet d'écran est "arrêt", le i^{ème} type d'effet d'écran n'est pas ajouté, i étant un nombre entier positif inférieur ou égal à x.

6. Procédé selon la revendication 1, comprenant en outre : avant de réaliser un éclairage sur la première cible de rendu pour générer la première cible de rendu éclairée,
le dessin d'un masque en utilisant un pochoir, le masque comprenant au moins une commande UI ; et
la superposition du masque sur une couche supérieure de la première cible de rendu, dans lequel
l'éclairage et/ou l'ajout de l'effet d'écran sont réalisés sur une zone de la première cible de rendu qui n'est pas bloquée par la commande UI.

7. Procédé selon la revendication 1, dans lequel l'éclairage et/ou l'ajout de l'effet d'écran sont réalisés au moins de l'une des manières suivantes : par rendu à trame alternée, par rendu à pixel alterné, ou par rendu à résolution réduite.

8. Procédé selon la revendication 1, dans lequel le rendu (203) des données de scène en utilisant le mode de rendu cible pour générer l'écran de jeu comprend :
le rendu et la réalisation d'un éclairage et d'un ombrage sur les données de scène pour obtenir une deuxième cible de rendu éclairée et ombrée au stade de rendu par rendu physique, PBR, lorsque le mode de rendu cible est le deuxième mode de rendu ; et
l'ajout de b effets d'écran préconfigurés à la deuxième cible de rendu au stade de post-traitement d'écran pour générer l'écran de jeu, b étant un nombre entier positif.

9. Procédé selon la revendication 1, dans lequel le rendu (203) des données de scène en utilisant le mode de rendu cible pour générer l'écran de jeu comprend :
le rendu et la réalisation d'un éclairage et d'un ombrage sur les données de scène pour obtenir une troisième cible de rendu éclairée et ombrée au stade de rendu d'une manière liée au rendu lorsque le mode de rendu cible est le troisième mode de rendu ; et
l'ajout de c effets d'écran préconfigurés à la troisième cible de rendu au stade de post-traitement d'écran pour générer l'écran de jeu, c étant un nombre entier positif.

10. Appareil conçu pour mettre en œuvre le procédé de rendu d'écran de jeu de l'une des revendications 1 à 9.

11. Terminal comprenant une mémoire et un ou plusieurs processeurs, la mémoire stockant des instructions lisibles par ordinateur, les instructions lisibles par ordinateur, lorsqu'elles sont exécutées par les un ou plusieurs processeurs, amenant les un ou plusieurs processeurs à réaliser le procédé de rendu d'écran de jeu de l'une des revendications 1 à 9.

12. Un ou plusieurs supports de stockage non transitoires lisibles par ordinateur stockant des instructions lisibles par ordinateur, les instructions lisibles par ordinateur, lorsqu'elles sont exécutées par un ou plusieurs processeurs, amenant les un ou plusieurs processeurs à réaliser le procédé de rendu d'écran de jeu de l'une des revendications 1 à 9.
